# FASCICULE DE BREVET EUROPEEN

(11) **EP 1 058 790 B1**
(45) Date de publication et mention de la délivrance du brevet: **30.03.2005**
(21) Numéro de dépôt: 99961165.0
(22) Date de dépôt: 23.12.1999
(51) Int. Cl.: F16C 11/06, F16J 1/22

(54) **CYLINDRE HYDRAULIQUE EMETTEUR D'EMBRAYAGE COMPORTANT DES MOYENS PERFECTIONNES D'ARTICULATION DE LA TIGE DE PISTON**
HYDRAULISCHER KUPPLUNGSZYLINDER MIT VERBESSERTEM KOLBENSTANGENGELENK
HYDRAULIC CLUTCH MASTER CYLINDER COMPRISING IMPROVED ARTICULATION MEANS FOR THE PISTON ROD

(30) Priorité: 30.12.1998 FR 9816619
(43) Date de publication de la demande: 13.12.2000
(73) Titulaire: VALEO EMBRAYAGES s.a.s., 80009 Amiens Cedex 1 (FR)
(72) Inventeur: REY, Frédéric, F-75011 Paris (FR)
(74) Mandataire: Lemaire, Marc
(86) Numéro de dépôt international: PCT/FR1999/003278
(87) Numéro de publication internationale: WO 2000/040868

(56) Documents cités:
- WO-A-88/08800
- DE-A- 1 430 608
- DE-A- 3 910 691
- FR-A- 2 651 838
- US-A- 5 163 773

## Description

La présente invention concerne un cylindre hydraulique émetteur.

L'invention concerne plus particulièrement un cylindre hydraulique émetteur pour la commande d'un embrayage de véhicule automobile.

L'invention concerne plus précisément la liaison entre la tige d'actionnement du piston et le corps du piston du cylindre émetteur.

A titre d'exemple, le document DE-A-3.910.691 décrit un cylindre hydraulique selon le préambule de la revendication 1. Il décrit notamment différents modes de réalisation d'un tel cylindre du type comportant au moins un piston avant monté coulissant axialement dans les deux sens par rapport à un corps d'émetteur, et comportant une tige arrière d'actionnement du piston d'orientation globalement coaxiale au piston et dont une tête avant est en forme générale de sphère convexe comportant une calotte avant et une calotte arrière globalement sphériques convexes concentriques et est reçue dans un logement complémentaire, formé dans le fond avant d'un alésage axial débouchant dans la face d'extrémité arrière d'un élément de corps de piston, de manière à permettre une articulation de type à rotule de la tête de la tige de piston par rapport au piston. La calotte avant coopérant avec le logement complémentaire de l'élément de corps de piston et la calotte arrière coopérant avec une partie arrière du logement aménagée dans l'élément de retenue axiale de la tige de piston.

Dans l'exemple de réalisation illustré aux figures 6 à 8 de ce document, on voit que la sphère formant tête de la tige de piston est une sphère métallique de petit diamètre, si on compare ce diamètre par rapport au diamètre de la tige elle-même et par rapport au diamètre intérieur de l'alésage légèrement tronconique formé à la partie arrière du piston.

La tête sphérique de la tige de piston est emmanchée dans un élément en plastique du corps du piston.

Grâce à une telle liaison, la tige de piston avec sa tête permet d'assurer un effort de traction, d'avant en arrière sur le piston, par l'intermédiaire de la tige. La conception proposée dans ce document, afin d'assurer une liaison fiable entre la tête sphérique et le corps de piston, fait appel à un élément rapporté de retenue axiale de la tige de piston qui est adjacent à la portion arrière de la tête sphérique de la tige de piston et qui est traversé par cette dernière.

Plus précisément, l'élément rapporté de retenue est un anneau élastique, de type circlips, monté dans une gorge radiale interne de l'alésage du corps de piston.

Du fait du diamètre de la tête sphérique métallique et des dimensions du logement complémentaire réalisé par moulage dans une partie massive du corps du piston, ce dernier élément ne possède pas une élasticité suffisante et il rend pratiquement impossible les montages et démontages successifs par emboîtement élastique, un démontage de la tige par traction d'avant en arrière par rapport au corps de piston provoquant généralement une dégradation de celui-ci.

L'élément rapporté de retenue permet d'assurer une liaison plus fiable, notamment en traction, de la tige de piston par rapport au corps de piston mais son montage est complexe, son démontage pratiquement impossible, et il nécessite de réaliser une gorge dans l'alésage interne du corps de piston en plastique qu'il est pratiquement impossible de réaliser par moulage, augmentant ainsi le coût de fabrication du corps de piston.

L'invention a pour objet de remédier aux inconvénients qui viennent d'être mentionnés.

Dans ce but, l'invention propose un cylindre hydraulique émetteur du type mentionné précédemment, caractérisé en ce que les calottes avant et arrière présentent un diamètre supérieur à la plus grande dimension diamétrale de l'alésage.

Une telle solution permet une réalisation aisée par moulage du corps de piston et de disposer sur les parties avant et arrière de la tête de la tige de piston d'une périphérie globalement circulaire pour éviter les mouvements relatifs des appuis sphériques lors du mouvement de rotulage.

Selon d'autres caractéristiques de l'invention :
- les diamètres des calottes sphériques avant et arrière sont égaux ;
- le tronçon de la tête de la tige de piston, intermédiaire axialement entre les calottes sphériques avant et arrière, est de forme générale cylindrique avec son diamètre extérieur inférieur au diamètre intérieur de la portion axiale en vis-à-vis de l'alésage ;
- le tronçon intermédiaire comporte une série d'évidements radiaux répartis angulairement de manière régulière autour de l'axe de la tige de piston ;
- les évidements délimitent un tronçon intermédiaire de la tête de la tige de piston qui, en section transversale, présente un profil en forme de croix ;
- les surfaces périphériques des calottes sphériques sont en matériau plastique ;
- la tige de piston est réalisée par moulage en matière plastique ;
- lesdites calottes sphériques avant et arrière sont réalisées par surmoulage en matériau plastique autour d'un corps de tige métallique ;
- ladite partie arrière du logement est sensiblement en forme de tronçon concave de sphère ou de cône ;
- ledit élément de corps de piston est une pièce moulée en matière plastique ;
- l'élément de retenue de la tige de piston comporte un anneau arrière d'embase porté par le piston à partir duquel plusieurs bras de retenue s'étendent axialement vers l'avant à l'intérieur de l'alésage et dont les extrémités libres sont aménagées pour délimiter chacune une portion de ladite partie arrière du logement ;
- les bras de retenue sont répartis angulairement de manière régulière autour de l'axe de l'élément de retenue ;
- chaque bras de retenue comporte une branche d'extrémité libre avant aménagée pour délimiter une portion de ladite partie arrière du logement et une branche élastique intermédiaire qui raccorde la branche d'extrémité libre avant à l'anneau arrière d'embase ;
- en section par un plan axial, les deux branches de chaque bras sont agencées en V de manière que la branche intermédiaire de raccordement constitue une rampe de commande de la déformation élastique du bras de retenue pour provoquer son escamotage automatique, radialement vers l'extérieur, lors de l'introduction axiale d'arrière en avant de la tête de la tige du piston dans l'alésage ;
- l'anneau arrière d'embase de l'élément de retenue est monté dans une gorge radiale formée dans la paroi périphérique dudit élément de corps de piston, et chaque bras de retenue s'étend à travers une fenêtre formée dans l'épaisseur de l'élément de corps de piston ;
- le piston comporte une chemise externe tubulaire aménagée autour dudit élément de corps de piston et qui s'étend en regard de l'anneau arrière d'embase de l'élément de retenue.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée qui illustre un piston d'émetteur hydraulique et sa tige de piston associée réalisés conformément aux enseignements de l'invention ;
- la figure 2 est une vue en section axiale de l'ensemble de la figure 1 sur laquelle la tige de piston est illustrée au début de sa course d'introduction axiale dans le corps de piston en vue du montage de l'ensemble ;
- les figures 3 et 4 sont des vues similaires à celle de la figure 2 qui illustrent les deux étapes suivantes de la course de montage de la tige de piston dans le piston ;
- la figure 5 est une vue axiale depuis l'avant de l'élément élastique de retenue de la tige de piston ;
- la figure 6 est une vue en coupe selon la ligne 6-6 de la figure 5 ; et
- la figure 7 est une vue en section axiale d'un tronçon du piston selon l'invention avec ses trois composants principaux assemblés et qui illustre de manière plus précise l'agencement des bras de retenue.

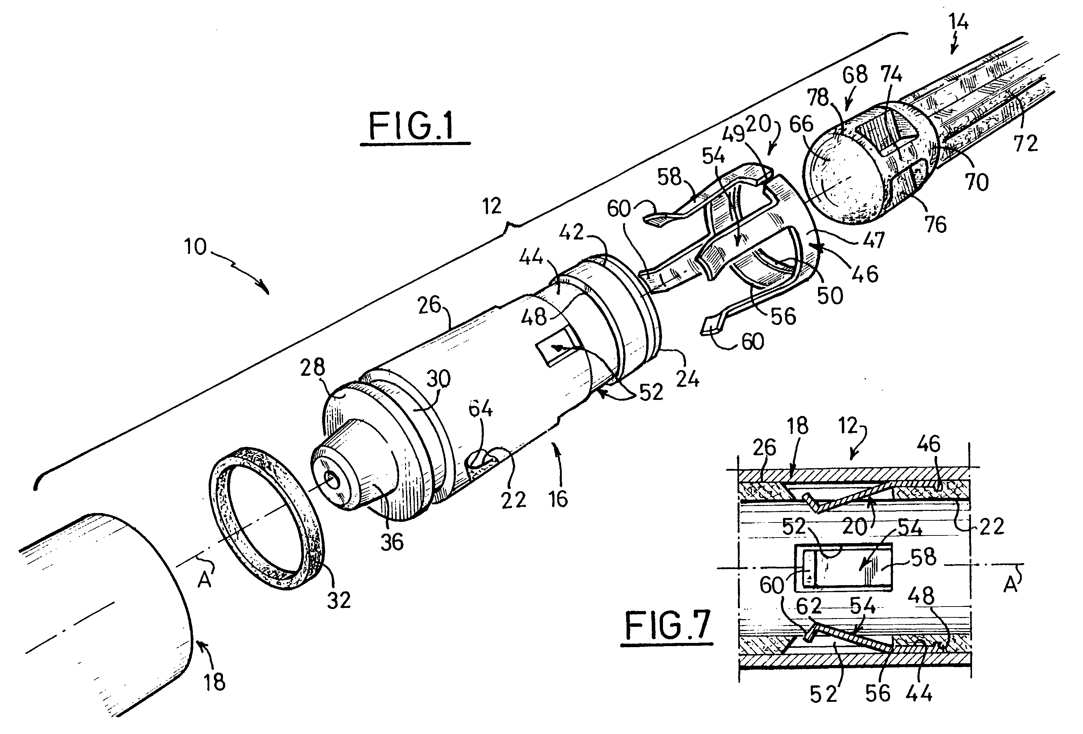

On a représenté, notamment à la figure 1, un ensemble 10 comportant un piston 12 et une tige de piston 14 appartenant à un cylindre hydraulique émetteur pour la commande d'un embrayage de véhicule automobile.

Le corps du cylindre, dans lequel est monté coulissant de manière étanche le piston 12 avec sa tige d'actionnement 14, peut être de toute conception générale classique connue qui n'est pas représentée sur les figures. Il est par exemple en matière plastique moulable.

Le piston 12 comporte un corps de piston 16, une chemise extérieure 18 et un élément élastique 20 de retenue axiale de la tige 14 par rapport au corps de piston 16. L'élément 20 est ici métallique.

A titre d'exemple, le corps de piston 16 est une pièce moulée en matière plastique dont la partie axiale avant, à gauche en considérant les figures 1 à 4, est massive et dont la partie axiale arrière, de plus grande longueur, est de forme globalement cylindrique tubulaire et délimite un alésage interne cylindrique 22 qui débouche axialement dans la face transversale d'extrémité arrière 24 du corps de piston 16.

La surface périphérique externe 26 du corps de piston 16 est cylindrique et elle comporte au voisinage de sa face transversale d'extrémité avant 28 une gorge radiale 30 qui reçoit un anneau d'étanchéité 32 destiné à assurer l'étanchéité entre la surface externe 26 du corps de piston 16 et la surface cylindrique interne 34 de la chemise 18.

Au delà de sa face transversale d'extrémité avant 28, le corps de piston se prolonge par un pion tronconique 36 pour le centrage d'une extrémité d'un ressort hélicoïdal (non représenté).

La chemise 18 est une chemise tubulaire, par exemple métallique, de section continue dont l'extrémité axiale arrière 38 comporte un rebord 40 annulaire d'orientation radiale intérieure qui est reçu dans une gorge radiale 42 formée dans la surface périphérique 26 du corps de piston 16 au voisinage de sa face transversale d'extrémité arrière 24.

En position assemblée de la chemise 18 sur le corps de piston 16, avec l'anneau d'étanchéité 32 préalablement monté dans sa gorge 30, le corps de piston 16 et sa chemise tubulaire 18 forme un ensemble qui peut être monté coulissant axialement dans les deux sens dans le cylindre de l'émetteur.

La surface périphérique 26 du corps de piston 16 comporte aussi une gorge radiale 44 destinée à recevoir l'anneau arrière d'embase 46 de la pièce élastique 20 de retenue de la tige 14.

La gorge 44 est de plus grande longueur axiale que la gorge 42 et elle comporte au voisinage de son extrémité axiale arrière une gorge 48 plus courte et plus profonde que la gorge 44, qui s'étend radialement vers l'intérieur dans le corps de piston 16 pour recevoir un bord annulaire radial interne 50 de positionnement et de retenue axiale de l'anneau arrière d'embase 46 dans la gorge 44.

La profondeur de la gorge 44 est telle que, en position montée de l'élément élastique 20 sur le corps de piston 16 et comme on peut le voir notamment à la figure 7, la surface externe 47 de l'anneau 46 est affleurante à la surface cylindrique externe 26 du corps de piston 16 de manière à permettre le montage du corps de piston 16 avec l'élément élastique de retenue 20 à l'intérieur de l'alésage 34 de la chemise 18.

Pour le montage de l'élément de retenue 20 dans la gorge 44, l'anneau d'embase 46 comporte une fente 49 qui permet de le déformer élastiquement radialement vers l'extérieur. Une fois monté, l'anneau est retenu radialement dans la gorge 44 par la partie en vis-à-vis de la chemise 18.

Le corps de piston 16 comporte aussi quatre fenêtres 52 débouchantes de forme rectangulaire et d'orientation axiale qui sont réparties angulairement de manière régulière autour de l'axe A du piston 12 et dont chacune permet le passage d'un bras de retenue correspondant 54 appartenant à l'élément élastique de retenue 20.

Chacun des bras 54 s'étend axialement vers l'avant à partir du bord d'extrémité axiale avant 56 de l'anneau arrière d'embase 46.

Chaque bras de retenue 54 comporte une branche intermédiaire de raccordement 58 qui s'étend axialement depuis l'anneau d'embase 46 vers l'avant et radialement vers l'intérieur en direction de l'axe A.

Ainsi, comme on peut le voir par exemple à la figure 7, chaque branche de raccordement 58 est, en section par un plan axial, rectiligne et inclinée en s'étendant à travers une fenêtre correspondante 52 du corps de piston 16 de manière que sa portion avant fasse saillie radialement vers l'intérieur dans l'alésage 22.

La branche de raccordement 58 se prolonge axialement vers l'avant par une branche d'extrémité libre avant 60 qui, comme on peut le voir à la figure 7, forme avec la branche intermédiaire de raccordement 58 un V dont la pointe inférieure 62 est orientée en direction de l'axe A.

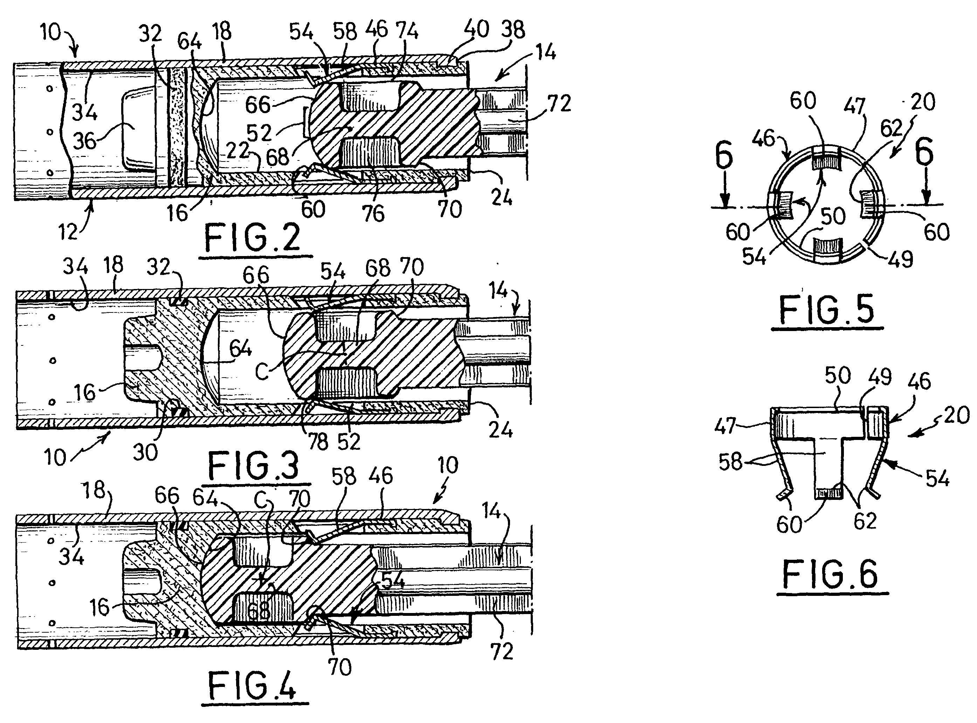

Chaque bras de retenue 54 est susceptible de fléchir élastiquement à partir de son état de repos illustré aux figures 2 et 7 pour permettre son escamotage radialement vers l'extérieur dans la fenêtre correspondante 52.

Comme on peut le voir aux figures 2 à 4, le fond axial avant 64 de l'alésage cylindrique borgne 22 est conformé en une surface de calotte sphérique avant concave de grand diamètre.

Au sens de l'invention, l'expression "grand diamètre" signifie que le diamètre de la surface globalement sphérique concave 64 est nettement supérieur au plus grand diamètre de l'alésage 22. En variante, ce grand diamètre est voisin du plus grand diamètre de l'alésage 22. Cette notion de plus grand diamètre est à comparer avec le petit diamètre de la tête sphérique 46 de la tige de piston 36 selon l'état de la technique illustré par le document DE-A-3.910.691.

La surface sphérique concave avant 64 est destinée à recevoir en coopération une portion de surface sphérique complémentaire 66 formée à l'extrémité avant de la tige de piston 14.

Plus précisément, la surface sphérique avant convexe 66 est un tronçon avant en forme de calotte sphérique 66 appartenant à la tête 68 d'extrémité libre avant de la tige arrière 14 d'actionnement du piston 12.

Le diamètre de la calotte sphérique convexe avant 66 est sensiblement égal au diamètre de la surface concave 64 avec son centre C (voir figure 4) situé sur l'axe A du piston.

La tête 68 de la tige de piston 14 comporte aussi un tronçon arrière en forme de calotte sphérique 70 qui délimite une surface sphérique convexe arrière 70 en forme de tronçon de sphère concentrique en C à la surface sphérique convexe avant 68.

Au delà de la surface sphérique convexe arrière 70, la tête 68 se prolonge axialement vers l'arrière par le corps 72 de la tige de piston 14 qui est ici de section globalement cruciforme.

Dans l'exemple illustré sur les figures, les surfaces sphériques convexes avant 66 et arrière 70 de la tête 68 sont de diamètre égaux.

Les calottes sphériques convexes avant 66 et arrière 70 sont reliées entre elles par un tronçon intermédiaire 74 de forme globalement cylindrique qui comporte des évidements de moulage 76 qui s'étendent radialement vers l'intérieur en direction de l'axe A et qui confèrent au tronçon intermédiaire 74, en section par un plan transversal, une forme en croix comme on peut le voir notamment à la figure 1.

La branche d'extrémité libre avant 60 de chaque bras élastique de retenue 54 est conformée avec une surface radialement intérieure en forme de portion de surface sphérique concave complémentaire de la surface sphérique convexe de la calotte arrière 70 de la tête 68 de la tige de piston 14.

La conception de l'élément élastique de retenue 20 avec ses bras de retenue 54 déformables élastiquement permet un montage particulièrement simple par encliquetage de la tête 68 en position dans le fond de l'alésage 22.

En effet, comme on peut le voir aux figures 2 à 4, les branches de raccordement 58 qui s'étendent à l'intérieur de l'alésage 22 à travers les fenêtres 52 constituent des rampes avec lesquelles coopère le bord 78, qui délimite la calotte sphérique convexe avant 66 par rapport au tronçon intermédiaire 74, pour escamoter radialement vers l'extérieur les bras de retenue 54 et permettre le passage d'arrière en avant de la tête 68 lors de l'introduction axiale de cette dernière dans l'alésage 22.

Les bras 54 demeurent partiellement escamotés durant le passage de l'ensemble de la tête de piston 68 comme on peut le voir à la figure 3 et, lorsque cette dernière atteint sa position axiale de montage dans laquelle la surface sphérique convexe avant 66 est en appui contre le fond sphérique concave arrière 64 de l'alésage 22, les bras élastiques de retenue 54 reviennent, par leur élasticité propre, dans leur position de repos illustrée aux figures 4 et 7 dans laquelle leurs branches d'extrémité libre avant 60 sont en appui contre la surface sphérique convexe arrière 70 de la tête de piston 68.

En position montée, et comme on peut le voir à la figure 4, la coopération des surfaces sphériques convexes 66 et 70 avec la surface sphérique concave 64 et avec les portions de surface sphérique constituées par les faces intérieures des branches d'extrémité libre 60, respectivement, permet un montage de type à rotule de la tête 68 par rapport au corps de piston 16 autour du centre C.

Afin de faciliter l'introduction axiale de la tête 68 dans l'alésage 22, les branches de raccordement 58 sont de longueur suffisante et leur inclinaison par rapport à l'axe A correspond à un angle aigu relativement faible.

Par contre, pour assurer une bonne retenue axiale de la tête 68 par rapport au corps de piston 76, en vue notamment de pouvoir exercer un effort de traction axiale d'avant en arrière sur le piston 16 au moyen de la tige 14, l'angle que forme chacune des branches d'extrémité libre avant 60 des bras de retenue 54 par rapport à l'axe A est nettement supérieur et est par exemple d'environ 45°.

En traction axiale du piston 12 par la tige 14, les bras 54 de retenue axiale de la tête 68 constituent une partie "souple" d'appui pour la tête 68.

Grâce à la conception escamotable des bras de retenue 54, il est possible de désolidariser la tête 68 du corps de piston 16 en exerçant un effort de traction axiale, d'avant en arrière, plus important sur la tige 14 afin de provoquer l'escamotage des bras de retenue 54 sous l'action de la surface sphérique convexe arrière 70 coopérant avec les branches d'extrémité libre avant 60 formant alors rampe pour l'escamotage des bras de retenue 54.

Conformément à un aspect de l'invention, les surfaces sphériques convexes 66 et 70 de la tête 68 formant sphère d'articulation de cette dernière sont en matière plastique.

A cet effet, l'ensemble de la tête 68 de la tige 14 peut être moulée en matière plastique, de préférence en une seule pièce avec le corps 72 de la tige 14.

A titre de variante non représentée, il est aussi possible de surmouler les surfaces sphériques 66 et 70 autour d'un corps métallique de tête et de tige de piston.

Le corps de piston 16 peut être une pièce moulée de préférence en matière plastique ou en métal.

La conception selon l'invention permet aussi de disposer d'appuis qui sont cinématiquement stables dans un alésage 22 de diamètre réduit.

En variante, le fond arrière 64 de l'alésage 22 peut être de forme tronconique concave, de sorte que le fond 64 est de forme globalement tronconique.

La surface convexe arrière 70 ou partie arrière de la tête de la tige de piston n'est pas forcément sphérique. Cette surface 70 peut être de forme tronconique ou autre.

## Revendications

1. Cylindre hydraulique émetteur comportant au moins un piston avant (12) monté coulissant axialement dans les deux sens par rapport à un corps d'émetteur, et comportant une tige arrière (14) d'actionnement du piston (12) d'orientation globalement coaxiale (A) au piston (12) et dont une tête avant (68) est en forme générale de sphère convexe et est reçue dans un logement complémentaire, formé dans le fond avant (64) d'un alésage axial (22) débouchant dans la face d'extrémité arrière (24) d'un élément (16) de corps de piston, de manière à permettre une articulation de type à rotule de la tête (68) de la tige (14) par rapport au piston (12, 16, 18), et du type comportant un élément rapporté (20) de retenue axiale de la tige (14) de piston, adjacent à la portion arrière (70) de la tête sphérique (68) de la tige (14) de piston et qui est traversé par cette dernière, la tête (68) de la tige (14) de piston comportant une calotte avant (66) et une calotte arrière (70) globalement sphériques convexes concentriques (C) qui coopèrent avec une portion avant (64) du logement en forme globalement de calotte sphérique concave complémentaire aménagée dans le fond avant de l'alésage (22) et, respectivement, avec une partie arrière (60) du logement aménagée dans l'élément de retenue axiale (20) de la tige (14) de piston, **caractérisé en ce que** les calottes avant et arrière présentent un diamètre supérieur à la plus grande dimension diamétrale de l'alésage (22).

2. Cylindre émetteur selon la revendication précédente, **caractérisé en ce que** les diamètres des calottes sphériques avant (66) et arrière (70) sont égaux.

3. Cylindre émetteur selon la revendication précédente, **caractérisé en ce que** le tronçon (74) de la tête (68) de la tige de piston, intermédiaire axialement entre les calottes sphériques avant (66) et arrière (70), est de forme générale cylindrique avec son diamètre extérieur inférieur au diamètre intérieur de la portion axiale en vis-à-vis de l'alésage (22).

4. Cylindre émetteur selon la revendication précédente, **caractérisé en ce que** le tronçon intermédiaire (74) comporte une série d'évidements radiaux (76) répartis angulairement de manière régulière autour de l'axe de la tige de piston.

5. Cylindre émetteur selon la revendication précédente, **caractérisé en ce que** les évidements (76) délimitent un tronçon intermédiaire (74) de la tête (68) de la tige de piston qui, en section transversale, présente un profil en forme de croix.

6. Cylindre émetteur selon la revendication 1, **caractérisé en ce que** les surfaces périphériques des calottes sphériques (66, 70) sont en matériau plastique.

7. Cylindre émetteur selon la revendication précédente, **caractérisé en ce que** la tige (14) de piston est réalisée par moulage en matière plastique.

8. Cylindre émetteur selon la revendication 6, **caractérisé en ce que** lesdites calottes sphériques avant (66) et arrière (70) sont réalisées par surmoulage en matériau plastique autour d'un corps de tige métallique.

9. Cylindre émetteur selon la revendication 1, **caractérisé en ce que** ladite partie arrière (60) du logement est sensiblement en forme de tronçon concave de sphère ou de cône.

10. Cylindre émetteur selon la revendication 1, **caractérisé en ce que** ledit élément (16) de corps de piston est une pièce moulée en matière plastique.

11. Cylindre émetteur selon la revendication précédente, **caractérisé en ce que** l'élément (20) de retenue de la tige de piston comporte un anneau arrière d'embase (46) porté par le piston (16) à partir duquel plusieurs bras de retenue (54) s'étendent axialement vers l'avant à l'intérieur de l'alésage (22) et dont les extrémités libres (60) sont aménagées pour délimiter chacune une portion de ladite partie arrière du logement.

12. Cylindre émetteur selon la revendication précédente, **caractérisé en ce que** les bras de retenue (54) sont répartis angulairement de manière régulière autour de l'axe (A) de l'élément de retenue (20).

13. Cylindre émetteur selon la revendication 11, **caractérisé en ce que** chaque bras de retenue (54) comporte une branche d'extrémité libre avant (60) aménagée pour délimiter une portion de ladite partie arrière du logement et une branche élastique intermédiaire (58) qui raccorde la branche d'extrémité libre avant (60) à l'anneau arrière d'embase (46).

14. Cylindre selon la revendication précédente, **caractérisé en ce que**, en section par un plan axial, les deux branches (58, 60) de chaque bras (54) sont agencées en V de manière que la branche intermédiaire de raccordement (58) constitue une rampe de commande de la déformation élastique du bras de retenue (54) pour provoquer son escamotage automatique, radialement vers l'extérieur, lors de l'introduction axiale d'arrière en avant de la tête (68) de la tige du piston dans l'alésage.

15. Cylindre selon la revendication 1, **caractérisé en ce que** l'anneau arrière d'embase (46) de l'élément de retenue (20) est monté dans une gorge radiale (44) formée dans la paroi périphérique (26) dudit élément (16) de corps de piston, et **en ce que** chaque bras de retenue s'étend à travers une fenêtre (52) formée dans l'épaisseur de l'élément (16) de corps de piston.

16. Cylindre émetteur selon la revendication précédente, **caractérisé en ce que** le piston (12, 16, 18) comporte une chemise externe tubulaire (18) aménagée autour dudit élément (16) de corps de piston et qui s'étend en regard de l'anneau arrière d'embase (46) de l'élément de retenue (20).

## Patentansprüche

1. Hydraulischer Geberzylinder mit wenigstens einem vorderen Kolben (12), der im Verhältnis zu einem Geberkörper in beiden Richtungen axial verschiebbar gelagert ist, und mit einer hinteren Stange (14) zur Betätigung des Kolbens (12) in einer zum Kolben (12) insgesamt koaxialen Ausrichtung (A), von der ein vorderer Kopf (68) in der allgemeinen Form einer konvexen Kugel ausgeführt und in einer formschlüssigen Aufnahme gelagert ist, die im vorderen Boden (64) einer axialen Bohrung (22) ausgebildet ist, die in der hinteren Abschlussfläche (24) eines Kolbenkörperelements (16) mündet, um eine kugelgelenkartige Anlenkung des Kopfes (68) der Stange (14) im Verhältnis zum Kolben (12) zu ermöglichen, und mit einem angesetzten Element (20) zum axialen Halten der Kolbenstange (14), das dem hinteren Abschnitt (70) des kugelförmigen Kopfes (68) der Kolbenstange zugekehrt ist, durch das letztere hindurchgeht und das einen am Kolben (12, 18) angebrachten hinteren Fußring (46) umfasst, von dem aus sich mehrere Haltearme (54) axial nach vorn im Innern der Bohrung (22) erstrecken und dessen freie Enden (60) angeordnet sind, um jeweils mit dem besagten hinteren Abschnitt (70) des Kopfes (68) der Kolbenstange zusammenzuwirken, wobei jeder Haltearm (54) einen vorderen freien Abschlussschenkel (60), der angeordnet ist, um mit dem besagten hinteren Abschnitt (70) des Kopfes (68) der Kolbenstange zusammenzuwirken, und einen elastischen Zwischenschenkel (58) umfasst, der den vorderen freien Abschlussschenkel (60) an den hinteren Fußring (46) anschließt, **dadurch gekennzeichnet, dass** das Halteelement (20) einen vorderen Teil (54) umfasst, der mit einer hinteren konvexen kugelförmigen Fläche (70) des Kopfes (68) der Kolbenstange zusammenwirkt, und dass, im Schnitt durch eine axiale Ebene, die beiden Schenkel (58, 60) jedes Arms V-förmig angeordnet sind, so dass der Anschlusszwischenschenkel (58) eine Betätigungsrampe für die elastische Verformung des Haltearms (54) bildet, um seine automatische Versenkung radial nach außen bei der von hinten nach vorn erfolgenden axialen Einführung des Kopfes (68) der Kolbenstange (14) in die Bohrung (22) zu bewirken.

2. Geberzylinder nach dem vorangehenden Anspruch, **dadurch gekennzeichnet, dass** die Haltearme (54) winklig gleichmäßig um die Achse (A) des Halteelements (20) herum verteilt sind.

3. Geberzylinder nach Anspruch 1, **dadurch gekennzeichnet, dass** der Neigungswinkel des vorderen freien Abschlussschenkels (60) bezogen auf die Achse des Halteelements (20) größer als der Neigungswinkel des Anschlussschenkels (58) ist.

4. Geberzylinder nach Anspruch 1, **dadurch gekennzeichnet, dass** der hintere Fußring (46) des Halteelements in eine radiale Auskehlung (44) eingesetzt ist, die in der Umfangswand (26) des besagten Kolbenkörperelements (16) ausgebildet ist, und dass sich jeder Haltearm (54) durch ein in der Dicke des Kolbenkörperelements (16) ausgebildetes Fenster (52) erstreckt.

5. Geberzylinder nach dem vorangehenden Anspruch, **dadurch gekennzeichnet, dass** der Kolben (12, 16, 18) eine rohrförmige äußere Laufbuchse (18) umfasst, die um das besagte Kolbenkörperelement (16) herum angeordnet ist und die sich gegenüber dem hinteren Fußring (46) des Halteelements (20) erstreckt.

6. Geberzylinder nach Anspruch 1, **dadurch gekennzeichnet, dass** der Kopf (68) der Kolbenstange eine vordere Kappe (66) und eine hintere Kappe (70) umfasst, die kugelförmig, konvex konzentrisch ausgeführt sind, deren Durchmesser größer als die größte diametrale Abmessung der Bohrung (22) ist und die mit einem in den vorderen Boden der Bohrung (22) eingearbeiteten vorderen Abschnitt (64) der insgesamt in Form einer formschlüssigen konkaven Kugelkappe ausgeführten Aufnahme bzw. mit einem in das Element zum axialen Halten (20) der Kolbenstange (14) eingearbeiteten hinteren Teil (60) der Bohrung zusammenwirken.

7. Geberzylinder nach dem vorangehenden Anspruch, **dadurch gekennzeichnet, dass** die Durchmesser der vorderen (66) und hinteren (70) Kugelkappen gleich sind.

8. Geberzylinder nach dem vorangehenden Anspruch, **dadurch gekennzeichnet, dass** das Zwischenteilstück (74) des Kopfes (68) der Kolbenstange axial zwischen den vorderen (66) und hinteren (70) Kugelkappen eine zylindrische Gesamtform aufweist, wobei sein Außendurchmesser kleiner als der Innendurchmesser des gegenüberliegenden axialen Abschnitts der Bohrung (22) ist.

9. Geberzylinder nach dem vorangehenden Anspruch, **dadurch gekennzeichnet, dass** das Zwischenteilstück (74) eine Reihe radialer Ausnehmungen (76) enthält, die winklig gleichmäßig um die Achse der Kolbenstange verteilt sind.

10. Geberzylinder nach dem vorangehenden Anspruch, **dadurch gekennzeichnet, dass** die Ausnehmungen (76) ein Zwischenteilstück (74) des Kopfes (68) der Kolbenstange begrenzen, das im Querschnitt ein kreuzförmiges Profil aufweist.

11. Geberzylinder nach Anspruch 1, **dadurch gekennzeichnet, dass** die Umfangsflächen der Kugelkappen (66, 70) aus Kunststoff bestehen.

12. Geberzylinder nach dem vorangehenden Anspruch, **dadurch gekennzeichnet, dass** die Kolbenstange (14) als Formteil aus Kunststoff ausgeführt ist.

13. Geberzylinder nach Anspruch 11, **dadurch gekennzeichnet, dass** die besagten vorderen (66) und hinteren (70) Kugelkappen durch Aufformen aus Kunststoff um einen Metallstangenkörper herum ausgeführt sind.

14. Geberzylinder nach Anspruch 1, **dadurch gekennzeichnet, dass** der besagte hintere Teil (60) der Aufnahme in etwa in Form eines konkaven Kugel- oder Kegelstücks ausgeführt ist.

15. Geberzylinder nach Anspruch 1, **dadurch gekennzeichnet, dass** das besagte Kolbenkörperelement (16) ein Formteil aus Kunststoff ist.

16. Geberzylinder nach Anspruch 15, **dadurch gekennzeichnet, dass** der besagte hintere Teil (60) der Aufnahme im vorderen freien Abschlussschenkel (60) jedes Haltearms (54) angeordnet ist.

## Claims

1. A hydraulic transmitter cylinder, comprising, at the front end, at least one piston (12) which is mounted for axial sliding movement in both directions with respect to a transmitter body, and comprising, at the rear end, an actuating rod (14), oriented generally coaxially (A) to the piston (12) for actuation of the piston (12), the actuating rod having a front end (68) which is generally in the form of a spherical sphere and is received in a complementary housing formed in the front base (64) of an axial bore (22) which is open into the rear end face (24) of a piston body element (16), whereby to provide a ball type articulation of the head (68) of the rod (14) with respect to the piston (12, 16, 18), and of the type comprising an attached retaining element (20) for axial retention of the piston rod (14), adjacent to the rear portion (70) of the spherical head (68) of the piston rod (14), with the latter extending through the retaining element, the head (68) of the piston rod (14) consisting of a front hemisphere (66) and a rear hemisphere (70) which are generally spherical, convex and concentric (C), which cooperate with a front portion (64) of the housing, generally in the form of a complementary, concave hemisphere, which is formed in the front base of the bore (22), and, respectively, with a rear portion (60) of the housing formed in the axial retaining element (20) for the piston rod (14), **characterised in that** the front and rear hemispheres have a diameter greater than the largest diametral dimension of the bore (22).

2. A transmitter cylinder according to Claim 1, **characterised in that** the diameters of the front spherical hemisphere (66) and rear hemisphere (70) are equal.

3. A transmitter cylinder according to Claim 2, **characterised in that** the portion (74) of the head (68) of the piston rod, which is disposed axially intermediate between the front hemisphere (66) and rear hemisphere (70), is of generally cylindrical form with its outer diameter smaller than the inner diameter of the facing axial portion of the bore (22).

4. A transmitter cylinder according to Claim 3, **characterised in that** the intermediate portion (74) has a set of radial openings (76) which are spaced apart circumferentially at regular intervals about the axis of the piston rod.

5. A transmitter cylinder according to Claim 4, **characterised in that** the openings (76) define an intermediate portion (74) of the head (68) of the piston rod which, in transverse cross section, has a cruciform profile.

6. A transmitter cylinder according to Claim 1, **characterised in that** the peripheral surfaces of the hemispheres (66, 70) are of plastics material.

7. A transmitter cylinder according to Claim 6, **characterised in that** the piston rod (14) is made by moulding in plastics material.

8. A transmitter cylinder according to Claim 6, **characterised in that** the said front hemisphere (66) and rear hemisphere (70) are made by *in situ* moulding of plastics material around a metallic rod body.

9. A transmitter cylinder according to Claim 1, **characterised in that** the said rear portion (60) of the housing is substantially in the form of a concave frustum of a sphere or cone.

10. A transmitter cylinder according to Claim 1, **characterised in that** the said piston body element (16) is a component moulded in plastics material.

11. A transmitter cylinder according to Claim 10, **characterised in that** the retaining element (20) for retaining the piston rod comprises a rear base ring (46) which is carried by the piston (16), and from which a plurality of retaining arms (54) extend axially forward inside the bore (22), the free ends (60) of the retaining arms being arranged so that each of them delimits a portion of the said rear portion of the housing.

12. A transmitter cylinder according to Claim 11, **characterised in that** the retaining arms (54) are spaced apart circumferentially at regular intervals around the axis (A) of the retaining element (20).

13. A transmitter cylinder according to Claim 11, **characterised in that** each retaining arm (54) comprises a branch with a free front end (60) which is arranged to define a portion of the said rear portion of the housing, together with an elastic intermediate branch (58) which joins the branch having the free front end (60) to the rear base ring (46).

14. A cylinder according to Claim 13, **characterised in that**, in cross section through an axial plane, the two branches (58, 60) of each arm (54) are arranged in a V shape, in such a way that the intermediate joining branch (58) constitutes a control ramp for control of the elastic deformation of the retaining arm (54), whereby to cause it to be automatically retracted radially outwards during the axial forward introduction of the head (68) of the piston rod into the bore.

15. A cylinder according to Claim 1, **characterised in that** the rear base ring (46) of the retaining element (20) is mounted in a radial groove (44) formed in the peripheral wall (26) of the said piston body element (16), and **in that** each retaining branch extends through a window (52) formed in the thickness of the piston body element (16).

16. A transmitter cylinder according to Claim 15, **characterised in that** the piston (12, 16, 18) includes an outer tubular jacket (18) formed around the said piston body element (16) and extending in facing relationship with the rear base ring (46) of the retaining element (20).
